# EUROPÄISCHE PATENTSCHRIFT

(11) **EP 1 200 453 B1**
(45) Veröffentlichungstag und Bekanntmachung des Hinweises auf die Patenterteilung: **19.02.2003**
(21) Anmeldenummer: 00956274.5
(22) Anmeldetag: 25.07.2000
(51) Int. Cl.: C07F 11/00, C08F 4/69, C08F 10/00

(54) **IMIDOCHROMVERBINDUNGEN IN KATALYSATORSYSTEMEN FÜR DIE OLEFINPOLYMERISATION**
IMIDOCHROME COMPOUNDS CONTAINED IN CATALYST SYSTEMS FOR OLEFIN POLYMERISATION
COMPOSES D'IMIDOCHROME CONTENUS DANS DES SYSTEMES DE CATALYSEURS POUR LA POLYMERISATION D'OLEFINES

(30) Priorität: 02.08.1999 DE 19935592
(43) Veröffentlichungstag der Anmeldung: 02.05.2002
(73) Patentinhaber: Basell Polyolefine GmbH, 77694 Kehl (DE)
(72) Erfinder: SCHOPF, Markus, 65931 Frankfurt (DE); SUNDERMEYER, Joerg, 35041 Marburg-Michelbach (DE); KIEPKE, Jennifer, 35037 Marburg (DE); RUFANOV, Konstantin A., 51379 Leverkusen (DE); HEITZ, Walter, 35274 Kirchhain (DE); PEUCKER, Uwe, 35091 Cölbe (DE)
(86) Internationale Anmeldenummer: EP0007103
(87) Internationale Veröffentlichungsnummer: WO01009148

(56) Entgegenhaltungen:
- EP-A- 0 641 804

## Beschreibung

Gegenstand der vorliegenden Erfindung sind Katalysatorsysteme, die Imidochromverbindungen enthalten, neue Imidochromkomplexe, ein Verfahren zur Polymerisation von Olefinen, sowie Verfahren zur Herstellung von Imidochromkomplexen.

Viele der Katalysatoren, die zur Polymerisation von α-Olefinen eingesetzt werden, basieren auf immobilisierten Chromoxiden (siehe z. B. Kirk-Othmer, "Encyclopedia of Chemical Technology", 1981, Vol.16, S. 402). Diese ergeben i.a. Ethylenhomo- und Copolymere mit Höhen Molekulargewichten, sind jedoch relativ unempfindlich gegenüber Wasserstoff und erlauben somit keine einfache Kontrolle des Molekulargewichts. Demgegenüber läßt sich durch Verwendung von Bis (cyclopentadienyl)- (US 3,709,853), Bis(indenyl)- oder Bis(fluorenyl)chrom (US 4,015,059), das auf einen anorganischen, oxidischen Träger auf zogen ist, das Molekulargewicht von Polyethylen durch Zugabe von Wasserstoff einfach steuern.

Wie bei den Ziegler-Natta-Systemen ist man auch bei den Chromverbindungen seit kurzem auf der Suche nach Katalysatorsystemen mit einem einheitlich definierten, aktiven Zentrum, sogenannten Single-Site-Katalysatoren. Durch gezielte Variation des Ligandgerüstes sollen Aktivität, Copolymerisationsverhalten des Katalysators und die Eigenschaften der so erhaltenen Polymere einfach verändert werden können.

Die Darstellung von Bis(tert.butylimido)bis(trimethylsiloxy)chrom durch Umsetzung von Dioxochromdichlorid mit Tert. butyl(trimethylsilyl)amin wurde von W. Nugent et al. in Inorg. Chem. 1980, 19, 777-779 beschrieben. Diaryl-Derivate dieser Verbindung Bis(tert.butylimido)di(aryl)chrom wurden von G. Wilkinson et al. in J. Chem. Soc. Dalt. Trans. 1988, 53-60 dargestellt. Die entsprechenden Dialkyl-Komplexe wurden erstmals von C. Schaverien et al. beschrieben (Organomet. 9 (1990), 774-782). Sie konnten auch eine Monoimidochromverbindung Tert.butylimido(oxo)chromdichlorid durch Umsetzung von Tert.butylimido-bis (trimethylsilanolato)oxochrom mit Phosphorpentachlorid isolieren (W. Nugent, Inorg. Chem. 1983, 22, 965-969).

EP-A-641804 beschreibt die Verwendung von Bis(alkylimido)- und Bis(arylimido)chrom(VI) Komplexen zur Polymerisation von Olefinen. In EP-A-816384 werden diese Bis(imido)chrom(VI) Komplexe auf Polyaminostyrol geträgert zur Polymerisation von Ethylen und Copolymerisation von Ethylen mit höheren α-Olefinen verwendet. Die Darstellung der Bis (arylimido)chromdichloride ist hierbei ein dreistufiger Syntheseweg, da die Umsetzung von Dioxochromdichlorid mit N-Trimethylsilylanilinen nicht zu Bis(arylimido)chromdichlorid führt.

G. Wilkinson et al. konnten Tert.butylimidochrom(V)trichlorid und dessen Donor-koordinierte Derivate darstellen (J. Chem. Soc. Dalt. Trans. 1991, 2051-2061).

Aufgabe der vorliegenden Erfindung bestand nun darin, neue Katalysatorsysteme zu finden, die sich einfach modifizieren lassen und zur Polymerisation von α-Olefinen geeignet sind.

Weiterhin bestand die Aufgabe darin, einen verbesserten Syntheseweg zur Darstellung von Bis(imido)chrom(VI)verbindungen zu finden.

Demgemäß wurden Katalysatorsysteme gefunden, enthaltend
(A) mindestens eine Imidochromverbindung, erhältlich durch ein Verfahren, welches folgende Verfahrensschritte beinhaltet:
   (a) Kontaktieren einer Dioxochromverbindung mit einer N-Sulfinylverbindung R¹-N=S=O oder R²-N=S=O, worin die Variablen folgende Bedeutung haben:
      - R¹: C₁-C₂₀-Alkyl, C₂-C₂₀-Alkenyl, C₆-C₂₀-Aryl, Alkyl-aryl mit 1 bis 10 C-Atomen im Alkylrest und 6-20 C-Atomen im Arylrest, wobei der organische Rest R¹ auch inerte Substituenten tragen kann, SiR³₃,
      - R²: R³C=NR⁴, R³C=O, R³C=O(OR⁴), R³C=S, (R³)₂P=O, (OR³)₂P=O, SO₂R³, R³R⁴C=N, NR³R⁴ oder BR³R⁴,
      - R³,R⁴: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³ und R⁴ auch inerte Substituenten tragen können,
   (b) Kontaktieren des so erhaltenen Reaktionsproduktes mit Chlor, wenn eine Sulfinylverbindung R¹-N=S=O eingesetzt wurde und für den Fall, daß eine N-Sulfinylverbindung R²-N=S=O eingesetzt wurde, mit Chlor oder Sulfurylchlorid oder mit keinem weiteren Reagens,
(B) mindestens eine Aktivatorverbindung
   und
(C) gegebenenfalls einen oder mehrere weitere für die Polymerisation von Olefinen übliche Katalysatoren.

Weiterhin wurden Imidochromverbindungen der allgemeinen Formel II, 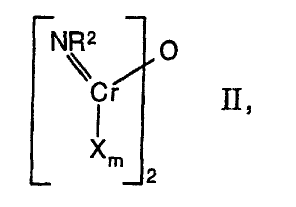 gefunden, worin die Variablen folgende Bedeutung haben:
- R²: R³C=NR⁴, R³C=O, R³C=O(OR⁴), R³C=S. (R³)₂P=O, (OR³)₂P=O, SO₂R³, R³R⁴C=N, NR³R⁴ oder BR³R⁴,
- X: unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
- R³-R⁶: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³ bis R⁶ auch inerte Substituenten tragen können,
- m: 1 für dianionische X, 2 für monoanionische X.

Auch wurden Imidochromverbindungen der allgemeinen Formel III 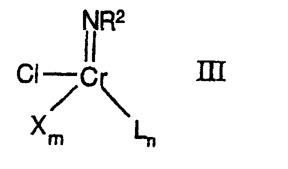 gefunden, worin die Variablen folgende Bedeutung haben:
- R²: R³C=NR⁴, R³C=O, R³C=O(OR⁴), R³C=S, (R³)₂P=O, (OR³)₂P=O, SO₂R³, R³R⁴C=N, NR³R⁴ oder BR³R⁴,
- X: unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
- R³-R⁶: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³ bis R⁶ auch inerte Substituenten tragen können,
- m: 1 für dianionische X, 2 für monoanionische X
- L: neutraler Donor,
- n: 0 bis 3.

Des weiteren wurde ein Verfahren zur Herstellung einer Imidochromverbindung der allgemeinen Formel IV gefunden, 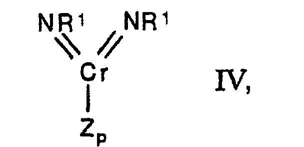 worin die Variablen folgende Bedeutung haben:
- R¹: C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Aryl-rest, wobei der organische Rest R¹ auch inerte Substituenten tragen kann, SiR³₃,
- Z: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
- R³,R⁵,R⁶: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³, R⁵ und R⁶ auch inerte Substituenten tragen können,
- p: 1 für dianionische Z, 2 für monoanionische Z,
dadurch gekennzeichnet, daß man eine Dioxochromverbindung mit einer N-Sulfinylverbindung R¹-NSO umsetzt.

Weiterhin wurde ein Verfahren zur Herstellung einer Imidochromverbindung der allgemeinen Formel I gefunden 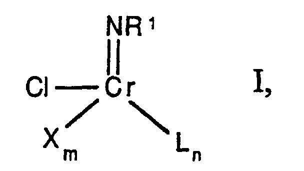 worin die Variablen folgende Bedeutung haben:
- X: unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
- R₁: C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Aryl-rest, wobei der organische Rest R¹ auch inerte Substituenten tragen kann, SiR³₃,
- R³,R⁵,R⁶: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³, R⁵ und R⁶ auch inerte Substituenten tragen können,
- L: neutraler Donor,
- n: 0 bis 3,
- m: 1 für dianionische X, 2 für monoanionische X
dadurch gekennzeichnet, daß man eine Imidochromverbindung der allgemeinen Formel V 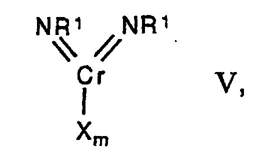 worin die Variablen folgende Bedeutung haben:
- R¹: C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Aryl-rest, wobei der organische Rest R¹ auch inerte Substituenten tragen kann, SiR³₃,
- X: unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
- R³,R⁵,R⁶: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³, R⁵ und R⁶ auch inerte Substituenten tragen können,
- m: 1 für dianionische X, 2 für monoanionische X,
mit Chlor umsetzt.

Auch wurde ein Verfahren zur Herstellung einer Imidochromverbindung der allgemeinen Formel III gefunden, 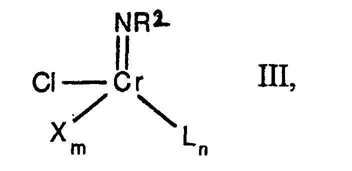
- R²: R³C=NR⁴, R³C=O, R³C=O(OR⁴), R³C=S, (R³)₂P=O, (OR³)₂P=O, SO₂R³, R³R⁴C=N, NR³R⁴ oder BR³R⁴,
- X: unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
- R³-R⁶: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³ bis R⁶ auch inerte Substituenten tragen können,
- L: neutraler Donor,
- n: 0 bis 3,
- m: 1 für dianionische X, 2 für monoanionische X,
dadurch gekennzeichnet, daß man eine Dioxochromverbindung mit einer N-Sulfinylverbindung R²-N=S=O in Gegenwart von Chlor oder Sulfurylchlorid umsetzt.

Auch wurde ein Verfahren zur Herstellung einer Imidochromverbindung der allgemeinen Formel VI gefunden 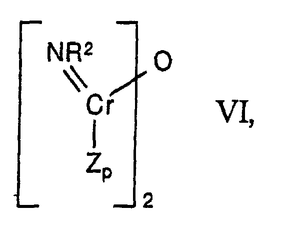 worin die Variablen folgende Bedeutung haben:
- R²: R³C=NR⁴, R³C=O, R³C=O(OR⁴), R³C=S, (R³)₂P=O, (OR³)₂P=O, SO₂R³, R³R⁴C=N, NR³R⁴ oder BR³R⁴,
- Z: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
- R³-R⁶: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³ bis R⁶ auch inerte Substituenten tragen können,
- p: 1 für dianionische Z, 2 für monoanionische Z,
dadurch gekennzeichnet, daß man eine Dioxochromverbindung mit einer N-Sulfinylverbindung R²-NSO umsetzt.

Des weiteren wurde ein Verfahren zur Polymerisation von Olefinen bei Temperaturen im Bereich von 0 bis 300°C und bei Drücken von 1 bis 4000 bar gefunden, dadurch gekennzeichnet, daß man die Polymerisation in Anwesenheit eines erfindungsgemäßen Katalysatorsystems durchführt.

Das Verfahren zur Herstellung der Chromkomplexe kann verschiedenste Dioxochromverbindungen als Ausgangsstoffe einsetzen. Wichtig ist das Vorhandensein der beiden Oxogruppen. Weitere Liganden in der Chromausgangsverbindung können unter anderem die für X und Z angeführten, mono- und dianionischen Liganden sein. Monoanionische Liganden sind z.B. Halogene, wie z.B. Fluor, Chlor, Brom und Jod, Amide, z.B. Dimethylamid, Diethylamid und Pyrrollidin, Alkoholat, z.B. Methanolat, Ethanolat, Isopropanolat, Butanolat, Phenolat und Biphenolat, Carboxylat, z.B. Acetat und Trifluoracetat, β-Diketonat, z.B. Acetylacetonat, Dibenzoylmethanat, 1,1,1-Trifluoropentandionat und 1,1,1,5,5,5,-Hexafluoropentandionat, Sulfonat, z.B. Toluolsulfonat und Trifluormethansulfonat, C₁-C₂₀-Alkyl, insbesondere C₁-C₂₀-Alkylsilyle, wie z.B. Methylentrimethylsilyl, Bistrimethylsilylmethyl, C₆-C₂₀-Aryl, wie z.B. Mesityl oder schwach, bzw. nicht koordinierende Anionen. Dianionische Liganden sind z.B. Sulfat und chelatisierende Dicarboxylate, wie z.B. Oxalat, Fumarat, Malonat oder Succinat und Dialkoholate wie z.B. Glykolat. Es können ein oder mehrere mono-, bzw. dianionische Liganden an die Dioxochromverbindung gebunden sein sein (siehe auch Compr. Coord. Chem. Vol. 3, G. Wilkinson, Pergamon Press 1987, First Edition, Kap. 35.6.1.3. S. 935 u. Kap. 35.7.1.-35.7.2. S. 938-941). Zusätzlich können an die Chrom-Edukte auch ein oder mehrere neutrale Donoren L koordiniert sein. Die Donormoleküle besitzen in der Regel ein Heteroatom der 15. oder 16. Gruppe des Periodensystems. Bevorzugt sind Amine, z.B. Trimethylamin, Dimethylamin, N,N-Dimethylanilin oder Pyridin, Ether, z.B. Tetrahydrofuran, Diethylether, Dibutylether, Dimethoxyethan oder Dimethyldiethylenglykol, Thioether, z.B. Dimethylsulfid, Ester, wie z.B. Essigsäuremethylester, Essigsäureethylester oder Ameisensäureethylester, Ketone, z.B. Aceton, Benzophenon oder Acrolein, Schiffsche Basen, α-Diimine, Phosphine, wie z.B. Trimethylphosphin, Triethylphosphin oder Triphenylphosphin, Phosphite, wie z.B. Trimethylphosphit oder Triethylphosphit, Phosphinoxide, Phosphorsäureester oder -amide, wie z.B. Hexamethylphosphorsäuretriamid oder N-Oxide. Die eingesetzten ChromVerbindungen können in den verschiedensten Oxidationsstufen vorliegen, bevorzugt von +4 bis +6 und ganz besonders bevorzugt in der Oxidationsstufe +6. Bevorzugte Dioxochromverbindungen sind Dioxochromdihalogenide und ganz besonders bevorzugt ist Dioxochromdichlorid.

Die eingesetzten N-Sulfinylverbindungen sind für R¹-N=S=O z.B. N-Sulfinylamine und für R²-N=S=O z.B. N-Sulfinylcarbamidine, N-Sulfinylcarbamide, N-Sulfinylcarbamate, N-Sulfinylcarboxylamide, N-Sulfinylthiocarboxylamide, N-Sulfinylphosphonamide oder N-Sulfinylsulfonamide. Die N-Sulfinylverbindungen werden meist problemlos und in der Regel mit hoher Ausbeute aus NH₂-Gruppen enthaltenden Verbindungen und Sulfinylierungsmitteln wie Thionylchlorid, Schwefeldioxid oder mit Hilfe anderer N-Sulfinylverbindungen dargestellt (Z. Chem. 22, (1982), 237-245).

Die Reste R³ und R⁴ sind C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1-oder 2-Ethylphenyl, wobei gegebenenfalls auch zwei R³ bis R⁴ zu einem 5- oder 6-gliedrigen Ring verbunden sein können und/oder auch inerte Substituenten wie Halogene, wie z.B. Fluor, Chlor oder Brom tragen. Bevorzugt Reste R³ und R⁴ sind Wasserstoff (falls dieser an ein Kohlenstoffatom gebunden ist), Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl, orto oder para substituierte Alkyl oder Chloro, bzw. Bromosubstituierte Phenyle, ortho, ortho oder ortho, para Dialkyl- oder Dichloro, bzw. Dibromosubstituierte Phenyle, Trialkyl- oder Trichlorosubstituierte Phenyle, Fluor substituierte Phenyle, Naphthyl, Biphenyl und Anthranyl. Besonders bevorzugte Reste R³ und R⁴ sind Methyl, Ethyl, n-Propyl, iso-Propyl, n-Butyl, iso-Butyl, tert.-Butyl, n-Pentyl, n-Hexyl, n-Heptyl, n-Octyl, Allyl, Benzyl, Phenyl, 2-Chlorphenyl, 2-Methylphenyl, 2,6-Dimethylphenyl, 2,4-Dimethylphenyl, 2,6-Diisopropylphenyl, 2,6-Dichlorphenyl, 2,4-Dichlorphenyl, 2,6-Dibromophenyl, 2,4-Dibromophenyl, 2,4,6-Trimethylphenyl, 2,4,6-Trichlorphenyl und Pentafluorophenyl.

Der Rest R¹ kann einerseits ein C-organischer Rest, wie oben für R³ und R⁴ beschrieben oder ein Si-organischer Rest sein. Bei den Si-organische Substituenten SiR³₃ können gegebenenfalls auch zwei R³ zu einem 5-oder 6-gliedrigen Ring verbunden sein und die drei Reste R³ sind unabhängig voneinander auswählbar, wie z.B. Trimethylsilyl, Triethylsilyl, Butyldimethylsilyl, Tributylsilyl, Triallylsilyl, Triphenylsilyl oder Dimethylphenylsilyl. Als Si-organische Substituenten kommen besonders Trialkylsilyl-Gruppen mit 1 bis 10 C-Atomen im Alkylrest in Betracht, insbesondere Trimethylsilyl-Gruppen. Bevorzugter Rest R¹ ist Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl, orto oder para substituierte Alkyl oder Chloro, bzw. Bromosubstituierte Phenyle, ortho, ortho oder ortho, para Dialkyl- oder Dichloro, bzw. Dibromosubstituierte Phenyle, Trialkyl- oder Trichlorosubstituierte Phenyle, Fluor substituierte Phenyle, Naphthyl, Biphenyl und Anthranyl. Besonders bevorzugter Rest R¹ ist Benzyl, Phenyl, 2-Chlorphenyl, 2-Methylphenyl, 2,6-Dimethylphenyl, 2,4-Dimethylphenyl, 2,6-Diisopropylphenyl, 2,6-Dichlorphenyl, 2,4-Dichlorphenyl, 2,6-Dibromophenyl, 2,4-Dibromophenyl, 2,4,6-Trimethylphenyl, 2,4,6-Trichlorphenyl, Pentafluorophenyl, Naphthyl und Anthranyl.

R² kann eine Imino-, Isocyanid-, Formyl-, Oxo-, Thioxo, Alkoxycarbonyl, Aryloxycarbonyl, Carbamoyl-, Phosphinoyl-, Dialkoxy-, bzw. -aryloxyphosphoryl, Sulfonyl-, Dialkyl, bzw. -arylaminooder Dialkyl-, bzw. -arylboryl- Gruppe sein. Bevorzugte Gruppen sind Sulfonyl und Oxo, insbesondere Arylsulfonyle, wie z.B. Toluolsulfonyl, Benzolsulfonyl, p-Trifluormethylbenzolsulfonyl oder 2,6-Diisopropylbenzolsulfonyl und Aryloxo, wie z.B. Benzoyl, 2-Methylbenzoyl, 2,6-Dimethylbenzoyl, 2,6-Diisopropylbenzoyl und 2,4,6-Trimethylbenzoyl.

Imidochromverbindungen sind im folgenden sowohl Mono- als auch Bisimidochromverbindungen.

Die Reaktion zur Darstellung der Imidochromverbindung (A) wird in der Regel unter Inertgasatmosphäre, mit z.B. Stickstoff oder Argon als Inertgas durchgeführt. Reaktionsschritt a) kann bei Temperaturen zwischen 0 bis 150°C, bevorzugt zwischen 10 und 100°C durchgeführt werden. Als Lösungsmittel finden vor allem aprotische Solventien Verwendung, wie Ether, z.B. Tetrahydrofuran. Diethylether, Dibutylether, 1,2-Dimethoxyethan oder Diethylenglykoldimethylether, Alkane, z.B. Pentan, n-Hexan, iso-Hexan, n-Heptan, n-Oktan, Cyclohexan oder Dekalin, Aromaten, z.B. Benzol, Toluol oder Xylol oder chlorierte Kohlenwasserstoffe wie Methylenchlorid, Chloroform, Tetrachlorkohlenstoff oder Dichlorethan. Auch Lösungsmittelgemische können verwendet werden. Bevorzugt werden Alkane und/oder chlorierte Kohlenwasserstoffe verwendet und ganz besonders bevorzugt n-Oktan und/oder Tetrachlorkohlenstoff.

Das Reaktionsprodukt aus Schritt a) kann dabei entweder mit oder ohne zwischenreinigung oder Isolierung dem zweiten Reaktionsschritt unterworfen werden. Die beiden Reaktionsschritte können auch gleichzeitig in einer Stufe durchgeführt werden. Bevorzugt wird der Imidochromkomplex mit R¹ aus Reaktionsschritt a) vor Schritt b) isoliert. Für Imidochromkomplexe mit R² ist Schritt b) optional. Der R²-Imidochromkomplex kann also auch direkt, ohne mit Chlor oder Sulfurylchlorid kontaktiert zu werden mit dem Aktivator vermischt und in der Polymerisation eingesetzt werden. Die Reaktionsprodukte aus a) mit R² können aber auch mit Chlor oder Sulfurylchlorid kontaktiert werden und dann erst mit der Aktivatorverbindung vermischt werden. Bevorzugt wird für R² Schritt a) und b) gleichzeitig, als Eintopf-Reaktion ausgeführt.

Das Verhältnis der Dioxochromverbindung zu N-Sulfinylverbindung liegt zwischen 1:1 und 1:10, Bevorzugt zwischen 1:1 und 1:3 und besonders bevorzugt zwischen 1:1 und 1:2.5.

Das Verhältnis der Dioxochromverbindung zu N-Sulfinylverbindung liegt zwischen 1:1 und 1:10, Bevorzugt zwischen 1:1 und 1:3 und besonders bevorzugt zwischen 1:1 und 1:2.5.

Reaktionsschritt b) kann in Analogie zu der Vorschrift von G. Wilkinson et al. J. Chem. Soc. Dalt. Trans. 1991, 2051-2061 durchgeführt werden, unter Verwendung des Reaktionsproduktes nach a) an Stelle von Bis(tert.butylimido)chromdichlorid. Für R² ist als Chlorübertragungsreagenz zusätzlich auch Sulfurylchlorid verwendbar. Das Sulfurylchlorid kann im Überschuß zur gebildeten Verbindung aus Schritt a) eingesetzt werden. Das Verhältnis Sulfurylchlorid zu eingesetzter Dioxochromverbindung kann zwischen 1:1 und 100:1 liegen, bevorzugt liegt es zwischen 1:1 und 10:1 und besonders bevorzugt zwischen 1:1 und 3:1. Die Reaktion wird bevorzugt in Tetrachlorkohlenstoff durchgeführt. Die Reaktionstemperatur kann dabei zwischen 0°C und 100°C betragen, bevorzugt liegt sie zwischen 10°C und 60°C und ganz besonders bevorzugt zwischen 20°C und 60°C.

Besonders bevorzugt sind Katalysatorsysteme, in welchen Imidochromverbindungen der allgemeinen Formel I 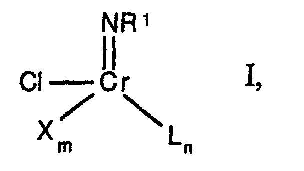 verwendet werden, worin die Variablen folgende Bedeutung haben:
- X: unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
- R¹: C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Aryl-rest, wobei der organische Rest R¹ auch inerte Substituenten tragen kann, SiR³₃,
- R³,R⁵,R⁶: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³,R⁵ und R⁶ auch inerte Substituenten tragen können,
- L: neutraler Donor,
- n: 0 bis 3,
- m: 1 für dianionische X, 2 für monoanionische X.

R¹ und dessen bevorzugte Ausführungsformen wurden schon weiter oben beschrieben. Die Beschreibung der Reste R³, R⁵ und R⁶ ist gleich wie für R³ und R⁴ weiter oben näher ausgeführt.

Die Substituenten X ergeben sich durch die Auswahl der entsprechenden Chromausgangsverbindungen, die zur Synthese der Chromkomplexe verwendet werden. Als Substituenten X kommen insbesondere die Halogene wie Fluor, Chlor, Brom oder Jod und darunter insbesondere Chlor in Betracht. Als weitere Liganden X sollen nur exemplarisch und keineswegs abschließend Trifluoracetat, BF₄⁻, PF₆⁻ sowie schwach bzw. nicht koordinierende Anionen (siehe z.B. S. Strauss in Chem. Rev. 1993, 93, 927-942) wie B(C₆F₅)₄⁻ genannt werden.

Auch Amide, Alkoholate, Sulfonate, Carboxylate und β-Diketonate sind besonders geeignet. Durch Variation der Reste R⁵ und R⁶ können z.B. physikalische Eigenschaften wie Löslichkeit fein eingestellt werden. Bevorzugt werden C₁-C₁₀-Alkyl wie Methyl, Ethyl, n-Propyl, n-Butyl, tert.-Butyl, n-Pentyl, n-Hexyl, n-Heptyl, n-Octyl, sowie Vinyl, Allyl, Benzyl und Phenyl als Reste R⁵ und R⁶ verwendet. Manche dieser substituierten Liganden X werden ganz besonders bevorzugt verwendet, da sie aus billigen und einfach zugänglichen Ausgangsstoffen erhältlich sind. So ist eine besonders bevorzugte Ausführungsform, wenn X für Dimethylamid, Methanolat, Ethanolat, Isopropanolat, Phenolat, Naphtholat, Triflat, p-Toluolsulfonat, Acetat oder Acetylacetonat steht. Auch die dianionische Liganden, wie sie weiter oben näher beschrieben sind, können eingesetzt werden. Ganz besonders bevorzugt ist X Chlor und m gleich 2. Die Benennung der Liganden X als Anionen beinhaltet keine Festlegung welcher Art die Bindung zum Übergangsmetall M ist. Ist X z.B. ein nicht oder schwach koordinierendes Anion, so ist die Wechselwirkung zwischen dem Metall M und dem Liganden X eher elektrostatischer Natur. Im Falle z.B. für X gleich Alkyl ist die Bindung dagegen kovalent. Die verschiedenen Arten von Bindungen sind dem Fachmann bekannt.

Auch der Donor L wurde weiter oben schon beschrieben, wobei n der Anzahl an neutralen Donormolekülen entspricht.

Die Imidochromverbindung I kann monomer oder dimer, aber auch polymer sein. Ist sie dimer oder polymer, so können ein oder mehrere Liganden am Chrom - dies können X, L oder auch die Imido-Gruppe sein - zwei Chromzentren verbrücken.

### Bevorzugte Imidochromkomplexe der Formel I bzw. III sind:

Methylimidochromtrichlorid, Ethylimidochromtrichlorid, n-Propylimidochromtrichlorid, iso-Propylimidochromtrichlorid, n-Butylimidochromtrichlorid, iso-Butylimidochromtrichlorid, tert.-Butylimidochromtrichlorid, n-Pentylimidochromtrichlorid, n-Hexylimidochromtrichlorid, n-Heptylimidochromtrichlorid, n-Octylimidochromtrichlorid, Allylimidochromtrichlorid, Benzylimidochromtrichlorid, Phenylimidochromtrichlorid, Naphthylimidochromtrichlorid, Biphenylimidochromtrichlorid, Anthranylimidochromtrichlorid, 2-Chlorphenylimidochromtrichlorid, 2-Methylphenylimidochromtrichlorid, 2,6-Dimethylphenylimidochromtrichlorid, 2,4-Dimethylphenylimidochromtrichlorid, 2,6-Diisopropylphenylimidochromtrichlorid, 2,6-Dichlorphenylimidochromtrichlorid, 2,4-Dichlorphenylimidochromtrichlorid, 2,6-Dibromophenylimidochromtrichlorid, 2,4-Dibromophenylimidochromtrichlorid, 2,4,6-Trimethylphenylimidochromtrichlorid, 2,4,6-Trichlorphenylimidochromtrichlorid, Pentafluorophenylimidochromtrichlorid, Trifluormethylsulfonylimidochromtrichlorid, Toluolsulfonylimidochromtrichlorid, Phenylsulfonylimidochromtrichlorid, p-Trifluormethylphenylsulfonylimidochromtrichlorid oder 2,6-Diisopropylphenylsulfonylimidochromtrichlorid. Formylimidochromtrichlorid, Acylimidochromtrichlorid, Benzoylimidochromtrichlorid, Naphthoylimidochromtrichlorid, Anthranoylimidochromtrichlorid, 2-Chlorbenzoylimidochromtrichlorid, 2-Methylbenzoylimidochromtrichlorid, 2,6-Dimethylbenzoylimidochromtrichlorid, 2,4-Dimethylbenzoylimidochromtrichlorid, 2,6-Diisopropylbenzoylimidochromtrichlorid, 2,6-Dichlorbenzoylimidochromtrichlorid, 2,4-Dichlorbenzoylimidochromtrichlorid, 2,6-Dibromobenzoylimidochromtrichlorid, 2,4-Dibromobenzoylimidochromtrichlorid, 2,4,6-Trimethylbenzoylimidochromtrichlorid, 2,4,6-Trichlorbenzoylimidochromtrichlorid oder Pentafluorobenzoylimidochromtrichlorid.

Die erfindungsgemäßen Katalysatorsysteme enthalten des weiteren einen Aktivator, die Komponente (B), die mit dem Chromkomplex in Kontakt gebracht wird. Als Aktivatorverbindungen kommen beispielsweise solche vom Alumoxantyp (oder Aluminoxan) in Betracht, insbesondere Methylalumoxan MAO. Alumoxane werden z.B. durch kontrollierte Addition von Wasser oder wasserhaltigen Substanzen zu Alkylaluminiumverbindungen, insbesondere Trimethylaluminium, hergestellt (z.B. US 4,404,344) Als Co-Katalysator geeignete Alumoxan-Zubereitungen sind kommerziell erhältlich. Es wird angenommen, daß es sich hierbei um eine Mischung von cyclischen und linearen Verbindungen handelt. Die cyclischen Alumoxane können durch die Formel (R⁷AlO)ₛ und die linearen Aluminoxane durch die Formel R⁷ (R⁷AlO)ₛAlR⁷₂ zusammengefaßt werden, wobei s den Oligomerisationsgrad angibt und eine Zahl von ungefähr 1 bis 50 ist. Vorteilhafte Alumoxane enthalten im wesentlichen Alumoxan-Oligomere mit einem Oligomerisationsgrad von etwa 2 bis 30 und R⁷ ist bevorzugt ein C₁-C₆-Alkyl und besonders bevorzugt Methyl, Ethyl, Butyl oder Isobutyl.

Neben den Alumoxanen können als Aktivatorkomponenten auch solche eingesetzt werden, wie sie in der sogenannten kationischen Aktivierung der Metallocen-Komplexe Verwendung finden. Derartige Aktivatorkomponenten sind z.B. aus EP-B-0468537 und aus EP-B-0427697 bekannt. Insbesondere können als solche Aktivatorverbindungen (B) Borane, Boroxine oder Borate, wie z. B. Trialkylboran, Triarylboran, Trimethylboroxin, Dimethylaniliniumtetraarylborat, Trityltetraarylborat, Dimethylaniliniumboratabenzole oder Tritylboratabenzole (siehe WO-A-97/36937) eingesetzt werden. Besonders bevorzugt werden Borane oder Borate eingesetzt, welche mindestens zwei perfluorierte Arylreste tragen.

Auch Aktivatorverbindungen mit stärker oxidierenden Eigenschaften sind einsetzbar, wie z.B. Silberborate, insbesondere Silbertetrakispentafluorophenylborat oder Ferroceniumborate, insbesondere Ferroceniumtetrakispentafluorophenylborat oder Ferroceniumtetraphenylborat.

Weiterhin können als Aktivatorkomponente Verbindungen wie Aluminiumalkyle, insbesondere Trimethylaluminium, Triethylaluminium, Triisobutylaluminium, Tributylaluminium, Dimethylaluminiumchlorid, Dimethylaluminiumfluorid, Methylaluminiumdichlorid, Methylaluminiumsesquichlorid, Diethylaluminiumchlorid oder Aluminiumtrifluorid eingesetzt werden. Auch die Hydrolyseprodukte von Aluminiumalkylen mit Alkoholen können eingesetzt werden (siehe z.B. WO-A-95/10546).

Als Aktivatorverbindungen können des weiteren auch Alkylverbindungen von Lithium, Magnesium oder Zink verwendet werden wie z.B. Methylmagnesiumchlorid, Methylmagnesiumbromid, Ethylmagnesiumchlorid, Ethylmagnesiumbromid, Butylmagnesiumchlorid, Phenylmagnesiumchlorid, Dimethylmagnesium, Diethylmagnesium, Dibutylmagnesium, Methyllithium, Ethyllithium, Methylzinkchlorid, Dimethylzink oder Diethylzink.

Besonders bevorzugt sind Katalysatorsysteme in denen die Aktivatorverbindung (B) aus der folgenden Gruppe ausgewählt ist: Aluminoxan, Trimethylaluminium, Triethylaluminium, Triisobutylaluminium, Dimethylaluminiumchlorid, Diethylaluminiumchlorid, Methylaluminiumdichlorid, Ethylaluminiumchlorid, Methylaluminiumsesquichlorid, Dimethylaniliniumtetrakispentafluorophenylborat, Trityltetrakispentafluorophenylborat oder Trispentafluorophenylboran.

Manchmal ist es wünschenswert, eine Kombination von verschiedenen Aktivatoren zu verwenden. Dies ist z.B. bei den Metallocenen bekannt, bei denen Borane, Boroxine (WO-A-93/16116) und Borate oft in Kombination mit einem Aluminiumalkyl eingesetzt werden. Generell ist auch eine Kombination von verschiedenen Aktivatorkomponenten mit den erfindungsgemäßen Chromkomplexen möglich.

Die Menge der zu verwendenden Aktivatorverbindungen hängt von der Art des Aktivators ab. Generell kann das Molverhältnis Chromkomplex (A) zu Aktivatorverbindung (B) von 1:0.1 bis 1:10000 betragen, bevorzugt werden 1:1 bis 1:2000. Das Molverhältnis von Chromkomplex (A) zu Dimethylaniliniumtetrakispentafluorophenylborat, Trityltetrakispentafluorophenylborat oder Trispentafluorophenylboran liegt bevorzugt zwischen 1:1 und 1:20, und besonders bevorzugt zwischen 1:1 und 1:10, zu Methylaluminoxan bevorzugt zwischen 1:1 und 1:2000 und besonders bevorzugt zwischen 1:10 und 1:1000. Da viele der Aktivatoren, wie z.B. Aluminiumalkyle gleichzeitig zur Entfernung von Katalysatorgiften verwendet werden (sogenannte scavenger), ist die eingesetzte Menge auch von der Reinheit der übrigen Einsatzstoffe abhängig. Der Fachmann kann jedoch durch einfaches Probieren die optimale Menge bestimmen.

Die Mischung mit der Aktivatorverbindung kann in den verschiedensten aprotischen Lösungsmitteln erfolgen, bevorzugt werden Alkane wie Pentan, Hexan, Heptan oder Oktan oder Aromaten wie Benzol, Toluol und Xylol, besonders bevorzugt sind Pentan, Hexan, Heptan und Toluol. Auch Lösungsmittelgemische insbesondere von Alkanen mit Aromaten sind günstig, um sich den Löslichkeiten des Katalysatorsystems anpassen zu können.

Die Mischung mit der Aktivatorverbindung erfolgt bei Temperaturen zwischen -50°C und 150°C, bevorzugt zwischen 10°C und 50°C und ganz besonders bevorzugt zwischen 15°C und 30°C.

Zur Polymerisation können einer oder mehrere der erfindungsgemäßen Katalysatorsysteme gleichzeitig verwendet werden. Dadurch können z.B. bimodale Produkte erhalten werden. Ein breiteres Produktspektrum kann auch durch Verwendung der erfindungsgemäßen Imidochromverbindungen in Kombination mit einem anderen polymerisationsaktiven Katalysator (C) erreicht werden. Dabei wird mindestens eines der erfindungsgemäßen Katalysatorsysteme in Gegenwart von mindestens einem für die Polymerisation von Olefinen üblichen Katalysator (C) verwendet. Als Katalysatoren (C) werden hierbei bevorzugt klassische Ziegler Natta Katalysatoren auf der Basis von Titan, klassische Phillips Katalysatoren auf der Basis von Chromoxiden, Metallocene, die sogenannten constrained geometry Komplexe(siehe z.B. EP-A-416815 oder EP-A-420436), Nickel und Palladium Bisimin-Systeme (zu deren Darstellung siehe WO-A-98/03559), Eisen und Cobalt Pyridinbisimin-Verbindungen (zu deren Darstellung siehe WO-A-98/27124) oder Chrompyrrol-Verbindungen (siehe z.B. EP-A-608447) verwendet. So können durch derartige Kombinationen z.B. bimodale Produkte hergestellt oder in situ Comonomer erzeugt werden. Hierbei sind je nach Katalysatorenauswahl ein oder mehrere Aktivatoren vorteilhaft. Die Polymerisationskatalysatoren (C) können ebenfalls geträgert sein und gleichzeitig oder in einer beliebigen Reihenfolge mit dem erfindungsgemäßen Katalysatorsystem oder seinen Komponenten kontaktiert werden. Auch eine Voraktivierung des Katalysators (C) mit einer Aktivatorverbindung (B) ist möglich.

Die Beschreibung und die bevorzugten Ausführungsformen von R¹ bis R⁶, als auch für X in den Imidochromverbindungen II und III, als auch in den Verfahren zur Herstellung der Chromkomplexe I, III, IV und VI, ersteres unter Verwendung der Imidochromverbindung V, sind gleich wie weiter oben ausgeführt. Auch die Reaktionsbedingungen sind größtenteils schon weiter oben beschrieben.

Z und dessen bevorzugte Ausführungsformen sind gleich wie für X weiter oben beschrieben und zusätzlich auch Alkyle oder Aryle, besonders bevorzugt Methylentrimethylsilyl, Benzyl oder Mesityl.

Die Verfahren zur Herstellung der Chromkomplexe III und V werden prinzipiell unter den gleichen Bedingungen durchgeführt und die Reaktionsparameter deswegen im folgenden gemeinsam beschrieben.

Essentieller Reaktionsschritt ist das Kontaktieren der N-Sulfinylverbindung mit der entsprechenden Dioxochromverbindung. Die Dioxochromverbindungen wurden ebenfalls schon weiter oben beschrieben. Bevorzugte Dioxochromverbindung ist hier auch Dioxochromdichlorid. Auch die N-Sulfinylverbindungen sind schon weiter oben beschrieben. Die bevorzugten Ausführungsformen ergeben sich aus den bevorzugten Ausführungsformen der Reste R¹, bzw. R² der Imido-Gruppe des entstehenden Chromkomplexes (siehe oben). Der Reaktionsschritt ist bereits für den Reaktionsschritt a) näher beschrieben. Danach kann ein üblicher Reinigungschritt z.B. durch Umkristallisation oder Filtration erfolgen.

Das erfindungsgemäße Verfahren zur Polymerisation von Olefinen läßt sich mit allen technisch bekannten Polymerisationsverfahren bei Temperaturen im Bereich von 0 bis 300°C und unter Drücken von 1 bis 4000 bar kombinieren. Die vorteilhaften Druck- und Temperaturbereiche zur Durchführung des Verfahrens hängen demgemäß stark von der Polymerisationsmethode ab. So lassen sich die erfindungsgemäß verwendeten Katalysatorsysteme in allen bekannten Polymerisationsverfahren, also beispielsweise in Hochdruck-Polymerisationsverfahren in Rohrreaktoren oder Autoklaven, in Suspensions-Polymerisationsverfahren, in Lösungs-Polymerisationsverfahren oder bei der Gasphasenpolymerisation einsetzen. Bei den Hochdruck-Polymerisationsverfahren, die üblicherweise bei Drücken zwischen 1000 und 4000 bar, insbesondere zwischen 2000 und 3500 bar, durchgeführt werden, werden in der Regel auch hohe Polymerisationstemperaturen eingestellt. Vorteilhafte Temperaturbereiche für diese Hochdruck-Polymerisationsverfahren liegen zwischen 200 und 300°C, insbesondere zwischen 220 und 270°C. Bei Niederdruck-Polymerisationsverfahren wird in der Regel eine Temperatur eingestellt, die mindestens einige Grad unter der Erweichungstemperatur des Polymerisates liegt. Die Polymerisationstemperatur kann zwischen 0°C und 180°C liegen. Insbesondere werden in diesen Polymerisationsverfahren Temperaturen zwischen 50 und 180°C, vorzugsweise zwischen 70 und 120°C, eingestellt. Von den genannten Polymerisationsverfahren ist erfindungsgemäß die Gasphasenpolymerisation, insbesondere in Gasphasenwirbelschicht-Reaktoren, sowie die Suspensionspolymerisation, insbesondere in Schleifen- und Rührkesselreaktoren, als auch die Lösungspolymerisation besonders bevorzugt. Die Gasphasenpolymerisation kann auch in der sogenannten condensed, supercondensed oder superkritischen Fahrweise durchgeführt werden. Die verschiedenen oder auch gleichen Polymerisationsverfahren können auch wahlweise miteinander in Serie geschaltet sein und so eine Polymerisationskaskade bilden. Weiterhin kann zur Regelung der Polymereigenschaften auch ein Zusatz, wie z.B. Wasserstoff in den Polymerisationsverfahren verwendet werden.

Nach dem erfindungsgemäßen Verfahren lassen sich verschiedene olefinisch ungesättigte Verbindungen polymerisieren, wobei dies auch die Copolymerisation umfaßt. Im Gegensatz zu einigen bekannten Eisen- und Cobaltkomplexen zeigen die erfindungsgemäß eingesetzten Übergangsmetallkomplexe eine gute Polymerisationsaktivität auch mit höheren α-Olefinen, so daß ihre Eignung zur Copolymerisation besonders hervorzuheben ist. Als Olefine kommen dabei neben Ethylen und α-Olefinen mit 3 bis 12 Kohlenstoffatomen auch interne Olefine und nichtkonjugierte und konjugierte Diene wie Butadien, 1,5-Hexadien oder 1,6-Heptadien, cyclische Olefine wie Cyclobuten, Cyclopenten oder Norbornen und polare Monomere wie Acrylsäureester, Acrolein, Acrylnitril, Vinylether, Allylether und Vinylacetat in Betracht. Auch vinylaromatische Verbindungen wie Styrol lassen sich nach dem erfindungsgemäßen Verfahren polymerisieren. Bevorzugt wird mindestens ein Olefin ausgewählt aus der Gruppe Ethen, Propen, 1-Buten, 1-Penten, 1-Hexen, 1-Hepten, 1-Octen, Cyclopenten und Norbornen polymerisiert. Eine bevorzugte Ausführungsform des erfindungsgemäßen Verfahrens ist dadurch gekennzeichnet, daß man als Monomere Gemische von Ethylen mit C₃bis C₈-α-Olefinen einsetzt.

Der Chromkomplex kann dabei entweder vor oder nach Kontaktierung mit den zu polymerisierenden Olefinen mit der oder den Aktivatorverbindungen in Kontakt gebracht werden. Auch eine Voraktivierung mit ein oder mehreren Aktivatorverbindungen vor der Durchmischung mit dem Olefin und weitere Zugabe der gleichen oder anderer Aktivatorverbindungen nach Kontaktierung dieses Gemisches mit dem Olefin ist möglich. Eine Voraktivierung erfolgt in der Regel bei Temperaturen zwischen 10-100°C, bevorzugt zwischen 20-80°C.

Auch kann mehr als eines der erfindungsgemäßen Katalysatorsysteme gleichzeitig mit dem zu polymerisierenden Olefin in Kontakt gebracht werden. Dies hat den Vorteil, daß so ein weiter Bereich an Polymeren erzeugt werden kann. Auf diese Weise können z.B. bimodale Produkte hergestellt werden.

Die erfindungsgemäßen Katalysatorsysteme können optional auch auf einem organischen oder anorganischen Träger immobilisiert und in geträgerter Form in der Polymerisation verwendet werden. Dies ist eine gängige Methode, um Reaktorablagerungen zu vermeiden und die Polymermorphologie zu steuern. Als Trägermaterialien werden bevorzugt Kieselgel, Magnesiumchlorid, Aluminiumoxid, mesoporöse Materialien, Alumosilikate und organische Polymere wie Polyethylen, Polypropylen oder Polystyrol und insbesondere Kieselgel oder Magnesiumchlorid verwendet.

Eines oder mehrere der erfindungsgemäßen Katalysatorsysteme können auf einem Träger immobilisiert sein. Die Komponenten des Katalysatorsystems können mit dem Träger in verschiedenen Reihenfolgen oder gleichzeitig in Kontakt gebracht werden. Dies wird in der Regel in einem inerten Lösungsmittel durchgeführt, das nach der Immobilisierung abfiltriert oder verdampft werden kann. Auch die Verwendung des noch feuchten, geträgerten Katalysators ist möglich. So kann zuerst die Mischung des Trägers mit dem oder den Aktivatorverbindungen oder auch zuerst das Kontaktieren des Trägers mit dem Polymerisationskatalysator erfolgen. Auch eine Voraktivierung des Katalysators mit einer oder mehreren Aktivatorverbindungen vor der Durchmischung mit dem Träger ist möglich. Die Menge an Chromkomplex (A) in mmol pro Gramm Trägermaterial kann stark variieren z.B. zwischen 0.001 bis 1 mmol/g. Die bevorzugte Menge an Chromkomplex (A) pro Gramm Trägermaterial liegt zwischen 0.001 und 0.5 mmol/g, und besonders bevorzugt zwischen 0.005 und 0.1 mmol/g. In einer möglichen Ausführungsform kann der Chromkomplex (A) auch in Anwesenheit des Trägermaterials hergestellt werden. Eine weitere Art der Immobilisierung ist auch die Vorpolymerisation des Katälysatorsystems mit oder ohne vorherige Trägerung.

Durch das erfindungsgemäße Verfahren lassen sich Polymerisate von Olefinen darstellen. Der Begriff Polymerisation, wie er zur Beschreibung der Erfindung hier verwendet wird, umfaßt sowohl Polymerisation als auch Oligomerisation, d.h. Oligomere und Polymere mit Molekulargewichten im Bereich von etwa 56 bis 4000000 können durch diese Verfahren erzeugt werden.

Auf Grund ihrer guten mechanischen Eigenschaften eignen sich die mit dem erfindungsgemäßen Katalysatorsystem hergestellten Polymerisate vor allem für die Herstellung von Folien, Fasern und Formkörpern.

Die erfindungsgemäßen Katalysatoren zeigen moderate Produktivitäten.

Die Vergleichsbeispiele zu den in EP-A-641 804 beschriebenen Bisimidochromverbindungen zeigen, daß die erfindungsgemäße Monoimdoverbindung (C₆F₅N)CrCl₃ höhere Aktivitäten ergab. Bei der Norbornenpolymerisation ergaben die Monoimidoverbindungen im Vergleich zu den Bisimidoverbindungen keine Metatheseprodukte.

Das neue Verfahren zur Darstellung von Bisimidochromverbindungen ist eine Ein-Topf-Synthese. Damit können bis zu zwei Synthese-Stufen bei der Darstellung von Bis(arylimido)chromkomplexen eingespart werden.

N-Sulfinylamine wurden von S. Chenini und M. Pizzotti (Inorg. Chim. Acta 42, (1980), 65) zur Synthese von Molybdänimidoverbindungen verwendet. Es wurde vermutet, daß das freiwerdenede SO₂ bei Verwendung der reduktionslabilen Chrom(VI)dioxoverbindungen die Chromspezies reduzieren würde. Überraschenderweise wird dies jedoch nicht beobachtet.

Die folgenden Beispiele erläutern die Erfindung:

Alle Arbeiten wurden, falls nicht anders vermerkt, unter Luftund Feuchtigkeitsausschluß durchgeführt. Toluol wurde über eine Molekularsiebsäule oder Kalium/Benzophenon getrocknet und abdestilliert. Triethylaluminium (2 M in Heptan) und MAO (Methylaluminoxan 30% in Toluol) wurden von den Firmen Witco GmbH und Albemarle bezogen.

### Analytik

Elementaranalysen wurden an einem Heraeus CHN-Rapid bestimmt.

IR-Spektren wurden mit einem Nicolet 510M als Nujolverreibung zwischen KBr-Platten aufgenommen.

Der η Wert wurde mit einem automatischen Ubbelohde Viskometer (Lauda PVS 1) mit Dekalin als Lösungsmittel bei 130°C bestimmt (ISO1628 bei 130°C, 0,001 g/ml Decalin).

EI-Massenspektren wurden mit einem Varian MAT CH7 aufgenommen.

Schmelzpunkte wurden an einem Schmelzpunktsbestimmungsgeraet b-540 der Firma Buechi bestimmt.

NMR-Spektren wurden mit einem Bruker ARX 200, bzw. Bruker AMX 300 aufgenommen.

Abkürzungen in den folgenden Tabellen:
- Kat.Bsp.: Katalysator entsprechend Beispiel
- Ausbeute: Ausbeute Polymer
- gP: Gramm Polymer
- Tg: Glastemperatur
- Tm: Schmelztemperatur
- h: Staudingerindex (Viskosität)
- tBu: tert. Butyl
- Ts: para-Toluolsulfon
- Bz: Benzoyl
- Tf: Trifluoromethansulfon

### Beispiel 1

Darstellung von Bis((2,6-diisopropylphenyl)imido)chromdichlorid Eine 0.84 molare Lösung von Chromylchlorid in CCl₄ (455 mg, 2.94 mmol CrO₂Cl₂) wurde mit 30 ml Octan verdünnt und langsam mit 1,45 g (6.47 mmol) (2,6-Diispropylphenyl)sulfinylamin versetzt.

Das Reaktionsgemisch wurde anschließend 12 Stunden am Rückfluß erhitzt, wobei zeitweise ein Inertgasstrom durch die Reaktionslösung geleitet wurde, um das entstehende SO₂ zu vertreiben. Der ausgefallene braunvioletter Feststoff wurde abfiltriert, mit kaltem Pentan gewaschen und im Hochvakuum getrocknet. Ausbeute: 1.22 g (88 %) Bis(diisopropylphenylimido)chromdichlorid.

1H-NMR (C₆D₆, 200 MHz) : δ = 1.08 (d, 24H, 3J_{HH} = 6.8 Hz, CH(CH₃)₂), 3.86 (sept, 4H, 3J_{HH} = 6.7 Hz, CH(CH₃)₂), 6.72 (s, 6H, Ph-H) ppm. 13C-NMR (C₆D₆, 50 MHz): δ = 23.5 (CH(CH₃)₂), 30.0 (CH(CH₃)₂), 123.7 (Ph-C₍ₘₑₜₐ₎), 132.3 (Ph-C₍ₚₐᵣₐ₎), 148.9 (Ph-C₍ₒᵣₜₕₒ₎)ppm.
IR (Nujol) : ∼ = 2855 s, 1642 w, 1582 m, 1296 m, 1262 m, 1221 w, 1142 w, 1080 m(br), 1022 m(br), 912 w, 799 m, 754 w, 721 w, 563 m cm-1.
EI-MS: m/z = 175 (DipN+, 57 %), 160 (Dip-H, 71 %), 119 (C₉H₁₂+, 25 %), 36 (C1, 100 %).
Dip = 2,6-Diisopropylphenyl
Ph = Phenyl

### Beispiel 2

Darstellung von Bis(tert.butylimido)chromdichlorid Eine 0.84 molare Lösung von Chromylchlorid in CCl₄ (566 mg, 3.67 mmol CrO₂Cl₂) wurde mit 20 ml Octan verdünnt und mit 963 mg (8.08 mmol) Tert.butylsulfinylamin versetzt. Das Reaktionsgemisch wurde anschließend 12 Stunden am Rückfluß erhitzt, wobei zeitweise ein Inertgasstrom durch die Reaktionslösung geleitet wurde um das entstehende SO₂ zu vertreiben. Der ausgefallene violette Feststoff wurde abfiltriert, mit kaltem Pentan gewaschen und im Hochvakuum getrocknet. Ausbeute: 770 mg (79 %) Bis(ter.butylimido)chromdichlorid.
1H-NMR (CDCl₃, 200 MHz): δ = 1.60 (s, 18H, C(CH₃)₃) ppm.
13C-NMR (CDCl₃, 50 MHz): δ = 30.2 (C(CH₃)₃) ppm.

### Beispiel 3

Darstellung von Bis((2,4,6-trimethylphenyl)imido)chromdichlorid Eine 0.84 molare Lösung von Chromylchlorid in CCl₄ (605 mg, 3.92 mmol CrO₂Cl₂) wurde mit 20 ml Octan verdünnt und langsam mit 1.66 g (8,63 mmol) Mesitylsulfinylamin versetzt. Das Reaktionsgemisch wurde anschließend 12 Stunden am Rückfluß erhitzt, wobei zeitweise ein Inertgasstrom durch die Reaktionslösung geleitet wurde, um das entstehende SO₂ zu vertreiben. Der ausgefallene rotbraune Feststoff wurde abfiltriert, mit kaltem Pentan gewaschen und im Hochvakuum getrocknet. Bis((2,4,6-trimethylphenyl)imido)chromdichlorid wurde in 91% Ausbeute isoliert.
1H-NMR (C₆D₆, 200 MHz) : δ = 1.84 (s, 6H, Mes-CH₃₍ₚₐᵣₐ₎), 2.25 (S, 12H, Mes-CH₃₍ₒᵣₜₕₒ₎), 6.23 (s, 4H, Mes-H₍ₘₑₜₐ₎) ppm.

### Beispiel 4

Darstellung von Bis(pentafluorophenylimido)chromdichlorid Eine 0.84 molare Lösung von Chromylchlorid in CCl₄ (3.30 g; 21.4 mmol CrO₂Cl₂) wurde mit 80 ml Tetrachlormethan verdünnt und bei Raumtemperatur mit 10.79 g (47.08 mmol) Pentafluorphenylsulfinylamin versetzt. Das Reaktionsgemisch wurde anschließend 4 Stunden gerührt bis keine Gasentwicklung mehr zu beobachten war. Beim Abkühlen wurde ein leichter Inertgasstrom durch die Reaktionslösung geleitet, um das bei der Reaktion entstandene SO₂ zu vertreiben. Der ausgefallene dunkelrote Feststoff wurde abfiltriert, mit kaltem Pentan gewaschen und im Hochvakuum getrocknet. Ausbeute: 95% Bis (pentafluorophenylimido) chromdichlorid.
19F-NMR (CDCl₃, 188 MHz): δ = -144.2 (d, 4F, 3JFF = 15.3 Hz. Arf-F₍ₒᵣₜₕₒ₎), -148.3 (t, 2F, 3J_{FF} = 20,4 Hz, Arf-F₍ₚₐᵣₐ₎), -155.9 (t, 4F, 3J_{FF} = 20.3 Hz, Arf-F₍ₘₑₜₐ₎)ppm.
IR (Nujol): ∼ = 1632 s, 1507 s, 1263 m, 1150 m, 1121 m, 1063 s, 997 s, 864 w, 802 w, 721 w, 642 m, 561 m, 440 w cm-1.
Arf = Pentafluorphenyl

### Beispiel 5

Umsetzung von Dioxochromdichlorid mit N-(Toluolsulfonyl)sulfinylamid
Eine 0.84 molare Lösung von Chromylchlorid in CCl₄ wurde bei Raumtemperatur mit 2.2 Aquivalenten des Sulfinylamids in Tetrachlormethan gelöst, versetzt. Anschließend wurde das Reaktionsgemisch so lange am Rückfluß erhitzt bis keine Gasentwicklung mehr zu beobachten war. Der entstandene braune Feststoff wurde abfiltriert, mit Pentan gewaschen und im Vakuum getrocknet. Ausbeute 90 %.

Für die Verbindung wurde im EPR-Spektrum nur ein scharfes Signal beobachtet.

Mittelwerte für die Elementaranalyse:
C - 25.31 H - 2.37 N - 3.28 Cl - 22.89 S - 12.15 Cr - 13.16

### Beispiel 6

Umsetzung von Dioxochromdichlorid mit N-(Toluolsulfonyl)sulfinylamid in Gegenwart von Chlor
Eine 0.84 molare Lösung von Chromylchlorid in CCl₄ wurde bei Raumtemperatur mit 2.2 Äquivalenten N-(Toluolsufonyl)sulfinylamid in Tetrachlormethan gelöst, versetzt. Durch die Reaktionslösung wurde 10 Minuten ein Chlorgasstrom geleitet. Anschließend wurde das Reaktionsgemisch so lange am Rückfluß erhitzt, bis keine Gasentwicklung mehr beobachtet werden konnte. Auch während der Reaktion wurde ein schwacher Chlorgasstrom durch die Reaktionslösung geleitet. Der entstandene gelbbraune Feststoff wurde abfiltriert, mit Pentan gewaschen und im Vakuum getrocknet. Die Ausbeute betrug ca. 90%.

Alternativ kann auch in die obige Lösung anstatt Chlorgas 5ml Sulfurylchlorid zugegeben werden. Nach 24 Stunden Rühren bei Raumtemperatur wurde analog aufgearbeitet.

Im ¹H-NMR-Spektrum sind sehr breite, schwache Signale zu erkennen, die auf eine paramagnetische Verbindung hinweisen.

### Beispiele 7 bis 9

Umsetzung der Bis(imido)chromdichloride mit Chlor (analog zu G. Wilkinson et al., J. Chem. Soc. Dalton Trans. 1991, 2051-2061) Diese Versuche wurden für Komplexe mit folgenden Resten am Imidoliganden durchgeführt: tert.Butyl (7), 2,6-Diisopropylphenyl(8) und Pentafluorophenyl (9)
5 g der Bis(imido)chromdichloride wurden in 50 ml Methylenchlorid gelöst. Bei Raumtemperatur wurde für 10 Minuten ein Chlorgasstrom durch die Reaktionslösung geleitet. Anschließend wurde eine Stunde bei Raumtemperatur, danach wurden die flüchtigen Bestandteile im Vakuum entfernt.

Diese Reaktionen verliefen nahezu quantitativ.
Elementaranalysen:
(8) ber.: C 43.20, H 5.14, N 4.20
   gef.: C 41.60, H 5.24, N 5.46
(9) ber.: C 21.23, N 4.13
   gef.: C 21.27, N 4.25

### Beispiel 10

### Ethenpolymerisation

Es wurden 0.20 mmol der Chromverbindung aus Beispiel 5 in 61 ml Toluol gelöst. Die Lösung wurde in einen 250 ml Glasautoklaven überführt, dort zunächst auf 0°C temperiert und anschließend 30 min mit 3 bar Ethen gesättigt. Dann wurde die Reaktion durch Zugabe von 670 mg MAO (Cr:A1=1:50), gelöst in 40 ml Toluol, gestartet. Dabei fielen schon nach wenigen Minuten erste Polymerpartikel aus der Reaktionslösung aus. Nach einer Reaktionszeit von 3 Stunden wurde die Reaktion durch Eintropfen der Polymerisationssmischung in ein Methanol/Salzsäure-Gemisch abgebrochen. Der dabei erhaltene Polymerniederschlag wurde abfiltriert, mit Methanol gewaschen und bei 100°C im Vakuum getrocknet. 2.3 g Polyethylen mit einem Schmelzpunkt von 136°C und η = 19 wurden erhalten.

### Beispiel 11

### Norbornen Ethen Copolymerisation

Zunächst wurden 0.200 mmol der Chromverbindung aus Beispiel 5 in 50 ml Toluol suspendiert. Diese Lösung wurde in einen 250 ml Glasautoklaven überführt. Zu dieser Lösung wurden nun 40 ml einer Norbornen-Toluol-Lösung (318.60 mmol Norbornen) gegeben. Die dabei erhaltene Reaktionsmischung wurde zunächst auf 0°C temperiert und anschließend 30 Minuten mit 3 bar Ethen gesättigt. Dann wurde die Reaktion durch Zugabe von 1.34 g MAO (Cr:A1=1:50), gelöst in 20 ml Toluol, gestartet. Nach einer Reaktionszeit von 1.5 Stunden wurde die Reaktion durch Eintropfen der Polymerisationsmischung in ein Methanol/Salzsäure-Gemisch abgebrochen. Der dabei erhaltene Polymerniederschlag wurde abfiltriert, mit Methanol gewaschen und bei 70°C im Vakuum getrocknet. Es konnten 28g Polymer mit T_{g} 128°C erhalten werden.

### Beispiel 12

### Hexenpolymerisation

Zunächst wurden 0.106 mmol der Chromverbindung aus Beispiel 5 in 10 ml Toluol gelöst. Zu dieser Lösung wurden nun 2.64 ml 1-Hexen (21.24 mmol) gegeben. Die erhaltene Reaktionsmischung wurde auf 25°C temperiert und die Polymerisation durch Zugabe von 300 mg MAO (Cr:A1=1:50), gelöst in 3 ml Toluol, gestartet. Nach einer Reaktionszeit von 3 Tagen wurde die Polymerisation durch Eintropfen der Polymerisationsmischung in ein Methanol/Salzsäure-Gemisch abgebrochen. Dabei ergab sich ein ölig, klebriger Niederschlag, der nicht filtriert werden konnte. Daher wurde das Methanol wieder abdestilliert und der erhaltene Rückstand in 50 ml Cyclohexan aufgenommen. Diese Lösung wurde nun mit 10 ml Wasser unterschichtet, um das erhaltene Polymer chromfrei zu waschen. Anschließend wurde die wäßrige Phase abgetrennt. Von der organischen Phase wurde das Lösungsmittel im Vakuum abdestilliert und der erhaltene Polymerrückstand wurde im Vakuum getrocknet. Die Ausbeute betrug 3% Polyhexen.

### Beispiele 13 bis 16

### Norbornenpolymerisation

A) Aktivierung des Katalysators mit einer kommerziellen MAO-Toluol-Lösung:
   Zunächst wurden 0.106 mmol der Chromverbindung aus Beispiel 5 mit 2 g Norbornen in 10 ml Toluol vermischt. Die erhaltene Reaktionsmischung wurde auf 25°C temperiert und die Reaktion durch Zugabe von 3 ml 1.53 M Methylaluminoxanlösung (in Toluol) gestartet. Nach einer Reaktionszeit von einer Stunde wurde die Reaktion durch Eintropfen der Polymerisationsmischung in ein Methanol/Salzsäure-Gemisch abgebrochen. Der dabei erhaltene Polymerniederschlag wurde abfiltriert, mit Methanol gewaschen und im Vakuum getrocknet.
B) Aktivierung des Katalysators mit festem MAO, das wieder in Toluol aufgenommen wurde.
   Zunächst wurden 0.106 mmol der Chromverbindung aus Beispiel 5 mit 2 g Norbornen, gelöst in 10 ml Toluol vermischt. Die erhaltene Reaktionsmischung wurde nun auf 25°C temperiert und die Reaktion durch Zugabe von 300 mg MAO, gelöst in 3 ml Toluol, gestartet. Nach einer Reaktionszeit von einer Stunde wurde die Reaktion durch Eintropfen der Reaktionsmischung in ein Methanol/Salzsäure-Gemisch abgebrochen. Der dabei erhaltene Polymerniederschlag wurde abfiltriert, mit Methanol gewaschen und im Vakuum getrocknet,

Die Ergebnisse der Polymerisationen sind Tabelle 1 zu entnehmen.

### Vergleichsbeispiele 17 und 18

### Norbornenpolymerisation

Die Versuche wurden wie zuvor für die Norbornenpolymerisation B) beschrieben durchgeführt. In Beispiel 17 wurde die Chromverbindung aus Beispiel 4, in Beispiel 18 die Chromverbindung aus Beispiel 2 verwendet.

Die Ergebnisse der Polymerisationen sind Tabelle 1 zu entnehmen.

**Tabelle 1 :**

| Ergebnisse der Norbornenpolymerisation | | |
|---|---|---|
| Bsp. | Metathese^{a)} | Ausbeute |
| 13 (A) | nein | 82 % |
| 14 (B) | nein | 95 % |
| 15 (A) | nein | 5 % |
| 16 (B) | nein | 53 % |
| 17 (B) | ja | 89 % |
| 18 (B) | ja | 5 % |

| | | |
|---|---|---|
| a) Metathese, bezieht sich auf Produkt erhalten durch Ring öffnende Metathese Polymerisation (ROMP) (ermittelt durch NMR-Messungen und Tg-Werte). | | |

### Beispiele 19 bis 24

### Ethenpolymerisation

Es wurden 0.05 mmol der in Tabelle 2 angegebenen Chromverbindung in 20 ml Toluol gelöst. Die Lösung wurde in einen 250 ml Glasautoklaven überführt, dort zunächst auf 60°C temperiert und anschließend 30 min mit 3 bar Ethen gesättigt. Dann wurde die Reaktion durch Zugabe von 12.5 mmol MAO (Cr:A1=1:250), gelöst in 20 ml Toluol, gestartet. Dabei fielen schon nach wenigen Minuten erste Polymerpartikel aus der Reaktionslösung aus. Nach einer Reaktionszeit von 30 Minuten bei 60°C unter konstantem Ethylendruck von 3 bar wurde die Reaktion durch Eintropfen der Polymerisationssmischung in 400 ml Methanol/konz. Salzsäure-Gemisch (10:1) abgebrochen. Der dabei erhaltene Polymerniederschlag wurde abfiltriert, mit Methanol gewaschen und bei 100°C im Vakuum getrocknet.

Beispiel 24 ist zum Vergleich aufgeführt.

**Tabelle 2:**

| Ergebnisse der Ethylenpolymerisation | | | | |
|---|---|---|---|---|
| Bsp. | Katalysator | Menge [mg] | Ausbeute [mg] | Aktivität [gPE/ mmol·bar·h] |
| 19 | [Cr(N^{t}Bu)Cl₃] | 11.5 | 287 | 3.8 |
| 20 | [Cr(NC₆F₅)Cl₃] | 17 | 1001 | 13.4 |
| 21 | [Cr(NTs)Cl₃] | 16.4 | 383 | 5.1 |
| 22 | [Cr(NBz)Cl₃] | 13.8 | 224 | 3 |
| 23 | [Cr(NTf)Cl₃] | 15.3 | 285 | 3.8 |
| 24 | [Cr(NC₆F₅)₂Cl₂] | 24.3 | 428 | 5.7 |

### Beispiele 25 bis 27

### Ethenpolymerisation

In einem 11-Autoklaven wurden bei 70°C 400 ml Toluol vorgelegt, dann wurde die in Tabelle 3 angegebene Menge Katalysator in 2.5 ml einer 30%igen MAO-Lösung (12 mmol) suspendiert und nach 10 Minuten in den Reaktor eingebracht. Die Polymerisation wurde durch Aufpressen von 40 bar Ethylen gestartet. Nach einer Stunde Polymerisationszeit bei 40 bar Ethylen und 70°C wurde die Reaktion durch Entspannen abgebrochen und das Polymer wie zuvor beschrieben aufgearbeitet.

**Tabelle 3:**

| Ergebnisse der Ethylenpolymerisation | | | | | | |
|---|---|---|---|---|---|---|
| Bsp. | Kat. (Bsp.) | Menge [mmol] | Hexen [ml] | Ausbeute [g] | Aktivität [gP/mmol·bar·h] | η [dl/g] |
| 25 | 5 | 0.056 | - | 12 | 5.4 | 6.3 |
| 26 | 5 | 0.056 | 40 | 7 | 3.1 | 5.69 |
| 27 | 8 | 0.06 | - | 3 | 1.2 | 15.1 |

### Beispiel 28

### Ethenpolymerisation

Die Polymerisation wurde wie für Bsp. 25 bis 27 beschrieben durchgeführt. Der Chromkomplex aus Beispiel 9 wurde verwendet. Als Cokatalysator wurden 2 ml Triethylaluminium (4 mmol) eingesetzt.

Es konnten 14.5 g Polyethylen mit einem η-Wert von 7.8 dl/g erhalten werden. Die Aktivität betrug 3 gP/mmol·bar·h.

## Patentansprüche

1. Katalysatorsysteme enthaltend
(A) mindestens eine Imidochromverbindung, erhältlich durch ein Verfahren, welches folgende Verfahrensschritte beinhaltet:
(a) Kontaktieren einer Dioxochromverbindung mit einer N-Sulfinylverbindung R¹-N=S=O oder R²-N=S=O, worin die Variablen folgende Bedeutung haben:
R¹ C₁-C₂₀-Alkyl, C₂-C₂₀-Alkenyl, C₆-C₂₀-Aryl, Alkylaryl.mit 1 bis 10 C-Atomen im Alkylrest und 6-20 C-Atomen im Arylrest, wobei der. organische Rest R¹ auch inerte Substituenten tragen kann, SiR³₃,
R² R³C=NR⁴, R³C=O, R³C=(OR⁴), R³C=S, (R³)₂P=O, (OR³)₂P=O, SO₂R³, R³R⁴C=N, NR³R⁴ oder BR³R⁴,
R³,R⁴ unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³ und R⁴ auch inerte Substituenten tragen können,
(b) Kontaktieren des so erhaltenen Reaktionsproduktes mit Chlor, wenn eine Sulfinylverbindung R¹-N=S=O eingesetzt wurde und für den Fall, daß eine N-Sulfinylverbindung R²-N=S=O eingesetzt wurde, mit Chlor oder Sulfurylchlorid oder mit keinem weiteren Reagens,
(B) mindestens eine Aktivatorverbindung
und
(C) gewünschtenfalls einen oder mehrere weitere für die Polymerisation von Olefinen übliche Katalysatoren.

2. Katalysatorsystem nach Anspruch 1, in welchem die Dioxochromverbindung in Verfahrensschritt (a) Dioxochromdichlorid ist.

3. Katalysatorsystem nach Anspruch 1, in welchem Imidochromverbindungen der allgemeinen Formel I 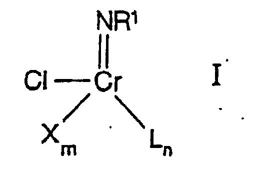 verwendet werden, worin die Variablen folgende Bedeutung haben:
X unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻ oder sperrige schwach oder nicht koordinierende Anionen,
R¹ C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, wobei der organische Rest R¹ auch inerte Substituenten tragen kann, SiR³₃,
R³,R⁵,R⁶ unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³, R⁵ und R⁶ auch inerte Substituenten tragen können,
L neutraler Donor,
n 0 bis 3,
m 1 für dianionische X, 2 für monoanionische X

4. Katalysatorsystem nach den Ansprüchen 1 bis 3, **dadurch gekennzeichnet, daß** die Aktivator Verbindung (B) aus der Gruppe Aluminoxan, Trimethylaluminium, Triethylaluminium, Triisobutylaluminium, Dimethylaluminiumchlorid, Diethylaluminiumchlorid, Methylaluminiumdichlorid, Ethylaluminiumchlorid, Methylaluminiumsesquichlorid, Dimethylaniliniumtetrakispentafluorophenylborat, Trityltetrakispentafluorophenylborat oder . Trispentafluorophenylboran ausgewählt ist.

5. Imidochromverbindung der allgemeinen Formel II 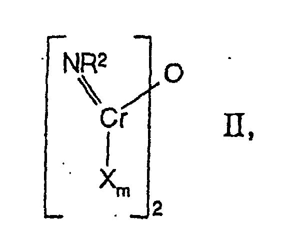 worin die Variablen folgende Bedeutung haben:
R² R³C=NR⁴, R³C=O, R³C=O(OR⁴), R³C=S, (R³)₂P=O, (OR³)₂P=O, SO₂R³, R³R⁴C=N, NR³R⁴ oder BR³R⁴,
X unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
R³-R⁶ unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³ bis R⁶ auch inerte Substituenten tragen können,
m 1 für dianionische X, 2 für monoanionische X

6. Imidochromverbindung der allgemeinen Formel III 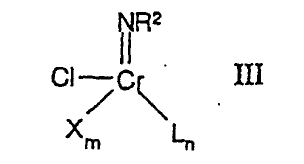 worin die Variablen folgende Bedeutung haben:
R² R³C=NR⁴, R³C=O, R³C=O(OR⁴), R³C=S, (R³)₂P=O, (OR³)₂P=O, SO₂R³, R³R⁴C=N, NR³R⁴ oder BR³R⁴,
X unabhängig voneinander Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
R³-R⁶ unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R³ bis R⁶ auch inerte Substituenten tragen können,
L neutraler Donor,
n 0 bis 3,
m 1 für dianionische X, 2 für monoanionische X

7. Verfahren zur Herstellung einer Imidochromverbindung der allgemeinen Formel IV, 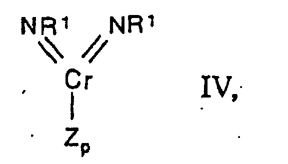 worin die Variablen die in Anspruch 3 genannte Bedeutung haben und:
Z unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Fluor, Chlor, Brom, Jod, NR⁵R⁶, NP(R⁵)₃, OR⁵, OSi(R⁵)₃, SO₃R⁵, OC(O)R⁵, β-Diketonat, Sulfat, Dicarboxylate, Dialkoholate, BF₄⁻, PF₆⁻, oder sperrige schwach oder nicht koordinierende Anionen,
p 1 für dianionische Z, 2 für monoanionische Z,
**dadurch gekennzeichnet, daß** man eine Dioxochromverbindung mit einer N-Sulfinylverbindung R¹-NSO umsetzt.

8. Verfahren zur Herstellung einer Imidochromverbindung der allgemeinen Formel I 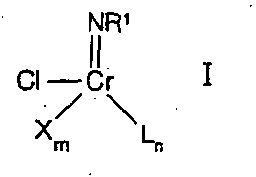 worin die Variablen die in Anspruch 3 genannte Bedeutung haben:
**dadurch gekennzeichnet, daß** man eine Imidochromverbindung der allgemeinen Formel V 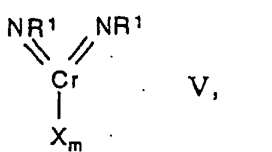 worin die Variablen die in Anspruch 3 genannte Bedeutung haben,
mit Chlor umsetzt.

9. Verfahren zur Herstellung einer Imidochromverbindung der allgemeinen Formel III 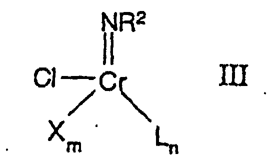 worin die Variablen die in Anspruch 6 genannte Bedeutung haben,
**dadurch gekennzeichnet, daß** man eine Dioxochromverbindung mit einer N-Sulfinylverbindung R²-N=S=O in Gegenwart von Chlor oder Sulfurylchlorid umsetzt.

10. Verfahren zur Herstellung einer Imidochromverbindung der allgemeinen Formel VI 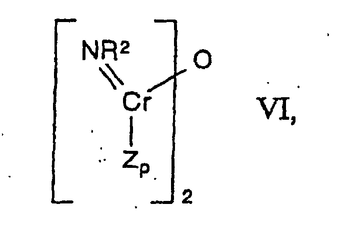 worin die Variablen die in Anspruch 6 und 7 genannte Bedeutung haben,
**dadurch gekennzeichnet, daß** man eine Dioxochromverbindung mit einer N-Sulfinylverbindung R²-NSO umsetzt.

11. Verfahren zur Polymerisation von Olefinen bei Temperaturen im Bereich von 0 bis 300°C und bei Drücken von 1 bis 4000 bar, **dadurch gekennzeichnet, daß** man die Polymerisation in Anwesenheit eines Katalysatorsystems gemäß den Ansprüchen 1 bis 4 durchführt.

12. Verfahren nach Anspruch 11, **dadurch gekennzeichnet, daß** man die Polymerisation in Gasphase, Lösung oder Suspension durchführt.

13. Verfahren nach Anspruch 11 oder 12, **dadurch gekennzeichnet, . daß** mindestens ein Olefin ausgewählt aus der Gruppe Ethen, Propen, 1-Buten, 1-Penten, 1-Hexen, 1-Hepten, 1-Okten, Cyclopenten und Norbornen polymerisiert wird.

14. Verfahren gemaß den Ansprüchen 11 bis 13, **dadurch gekennzeichnet, daß** mindestens ein Katalysatorsystem gemäß den Ansprüchen 1 bis 4 auf einem Träger immobilisiert ist.

## Claims

1. A catalyst system comprising
(A) at least one imidochromium compound obtainable by a process which comprises the following process steps:
(a) bringing a dioxochromium compound into contact with an N-sulfinyl compound R¹-N=S=O or R²-N=S=O, where the variables have the following meanings:
R¹ is C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, where the organic radical R¹ may also bear inert substituents, or SiR³₃,
R² is R³C=NR⁴, R³C=O, R³C=O(OR⁴), R³C=S, (R³)₂P=O, (OR³)₂P=O, SO₂R³, R³R⁴C=N, NR³R⁴ or BR³R⁴,
R³,R⁴ are independently C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, hydrogen if this is bound to a carbon atom, where the organic radicals R³ and R⁴ may also bear inert substituents,
(b) bringing the reaction product obtained in this way into contact with chlorine if a sulfinyl compound R¹-N=S=O has been used or, if an N-sulfinyl compound R²-N=S=O has been used, with chlorine or sulfuryl chloride or with no further reagent,
(B) at least one activator compound
and
(C) if desired, one or more further catalysts customary for the polymerization of olefins.

2. A catalyst system as claimed in claim 1 in which the dioxochromium compound in process step (a) is dioxochromium dichloride.

3. A catalyst system as claimed in claim 1 in which use is made of imidochromium compounds of the formula I 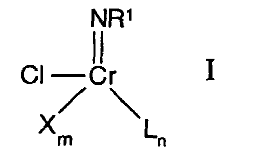 where the variables have the following meanings:
X are independently fluorine, chlorine, bromine, iodine, NR⁵R⁶, NP(R⁵)₃, OR⁵, OSi(R⁵)₃, SO₃R⁵, OC(O)R⁵, β-diketonate, sulfate, dicarboxylates, dialkoxides, BF₄⁻, PF₆⁻ or bulky weakly coordinating or noncoordinating anions,
R¹ is C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, where the organic radical R¹ may also bear inert substituents, or SiR³₃,
R³,R⁵,R⁶ are independently C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, hydrogen if this is bound to a carbon atom, where the organic radicals R³, R⁵ and R⁶ may also bear inert substituents,
L is an uncharged donor,
n is from 0 to 3,
m is 1 for dianionic X, 2 for monoanionic X.

4. A catalyst system as claimed in any of claims 1 to 3, wherein the activator compound (B) is selected from the group consisting of aluminoxane, trimethylaluminum, triethylaluminum, triisobutylaluminum, dimethylaluminum chloride, diethylaluminum chloride, methylaluminum dichloride, ethylaluminum chloride, methylaluminum sesquichloride, dimethylanilinium tetrakispentafluorophenylborate, trityl tetrakispentafluorophenylborate or trispentafluorophenylborane.

5. An imidochromium compound of the formula II 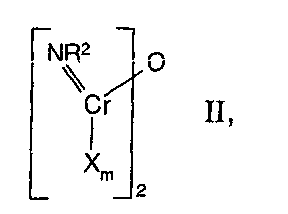 where the variables have the following meanings:
R² is R³C=NR⁴, R³C=O, R³C=O(OR⁴), R³C=S, (R³)₂P=O, (OR³)₂P=O, SO²R₃, R³R⁴C=N, NR³R⁴ or BR³R⁴,
X are independently fluorine, chlorine, bromine, iodine, NR⁵R⁶, NP(R⁵)₃, OR⁵, OSi(R⁵)₃, SO₃R⁵, OC(O)R⁵, β-diketonate, sulfate, dicarboxylates, dialkoxides, BF₄⁻, PF₆⁻, or bulky weakly coordinating or noncoordinating anions,
R³-R⁶ are independently C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, hydrogen if this is bound to a carbon atom, where the organic radicals R³ to R⁶ may also bear inert substituents,
m is 1 for dianionic X, 2 for monoanionic X.

6. An imidochromium compound of the formula III 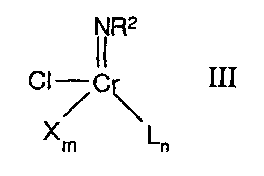 where the variables have the following meanings:
R² is R³C=NR⁴, R³C=O, R³C=O(OR⁴), R³C=S, (R³)₂P=O, (OR³)₂P=O, SO₂R³, R³R⁴C=N, NR³R⁴ or BR³R⁴,
X are independently fluorine, chlorine, bromine, iodine, NR⁵R⁶, NP(R⁵)₃, OR⁵, OSi(R⁵)₃, SO₃R⁵, OC(O)R⁵, β-diketonate, sulfate, dicarboxylates, dialkoxides, BF₄⁻, PF₆⁻, or bulky weakly coordinating or noncoordinating anions,
R³⁻R⁶ are independently C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, hydrogen if this is bound to a carbon atom, where the organic radicals R³ to R⁶ may also bear inert substituents,
L is an uncharged donor,
n is from 0 to 3,
m is 1 for dianionic X, 2 for monoanionic X.

7. A process for preparing an imidochromium compound of the formula IV, 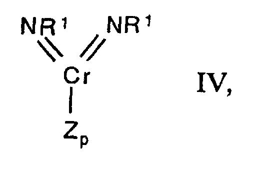 where the variables have the meanings specified in claim 3 and:
Z are independently C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, fluorine, chlorine, bromine, iodine, NR⁵R⁶, NP(R5)₃, OR⁵, OSi(R⁵)₃, SO₃R⁵, OC(O)R⁵, β-diketonate, sulfate, dicarboxylates, dialkoxides, BF₄-, PF6- or bulky weakly coordinating or noncoordinating anions,
p is 1 for dianionic Z, 2 for monoanionic Z,
which comprises reacting a dioxochromium compound with an N-sulfinyl compound R¹-NSO.

8. A process for preparing an imidochromium compound of the formula I 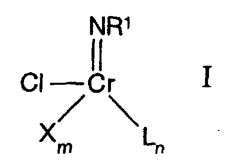 where the variables have the meanings specified in claim 3,
which comprises reacting an imidochromium compound of the formula V 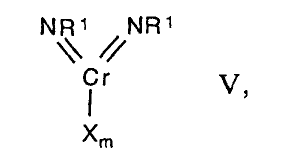 where the variables have the meanings specified in claim 3,
with chlorine.

9. A process for preparing an imidochromium compound of the formula III 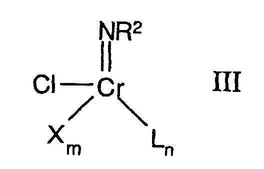 where the variables have the meanings specified in claim 6,
which comprises reacting a dioxochromium compound with an N-sulfinyl compound R²-N=S=O in the presence of chlorine or sulfuryl chloride.

10. A process for preparing an imidochromium compound of the formula VI 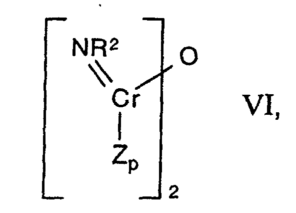 where the variables have the meanings specified in claim 6 or 7,
which comprises reacting a dioxochromium compound with an N-sulfinyl compound R²-NSO.

11. A process for the polymerization of olefins at from 0 to 300°C. and pressures of from 1 to 4000 bar, wherein the polymerization is carried out in the presence of a catalyst system as claimed in any of claims 1 to 4.

12. A process as claimed in claim 11, wherein the polymerization is carried out in the gas phase, in solution or in suspension.

13. A process as claimed in claim 11 or 12, wherein at least one olefin selected from the group consisting of ethene, propene, 1-butene, 1-pentane, 1-hexane, 1-heptene, 1-octane, cyclopentene and norbornene is polymerized.

14. A process as claimed in any of claims 11 to 13, wherein at least one catalyst system as claimed in any of claims 1 to 4 is immobilized on a support.

## Revendications

1. Systèmes de catalyseurs contenant
(A) au moins un composé d'imidochrome, pouvant être obtenu par un procédé qui comporte les étapes opératoires suivantes:
(a) mise en contact d'un composé de dioxochrome avec un composé N-sulfinylique R¹-N=S=O ou R²-N=S=O, où les variables ont la signification suivante:
R¹ alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle, tandis que le reste organique R¹ peut également porter des substituants inertes, SiR³₃,
R² R³C=NR⁴, R³C=O, R³C=O(OR⁴), R³C=S, (R³)₂P=O, (OR³)₂P=O, SO₂R³, R³R⁴C=N, NR³R⁴ ou BR³R⁴,
R³,R⁴ indépendamment l'un de l'autre, alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle; hydrogène, dans le cas où celui-ci est lié à un atome de carbone, tandis que les restes organiques R³ et R⁴ peuvent également porter des substituants inertes,
(b) mise en contact du produit de réaction ainsi obtenu avec du chlore, quand un composé de sulfinyle R¹-N=S=O a été introduit et, dans le cas où un composé de N-sulfinyle R²-N=S=O a été introduit, avec du chlore ou du chlorure de sulfuryle ou avec aucun autre réactif,
(B) au moins un composé activateur
et
(C) si on le souhaite, un ou plusieurs autres catalyseurs usuels pour la polymérisation des oléfines.

2. Système de catalyseur selon la revendication 1, dans lequel le composé de dioxochrome dans l'étape opératoire (a) est le dichlorure de dioxochrome.

3. Système de catalyseur selon la revendication 1, dans lequel on utilise des composés d'imidochrome de formule générale I 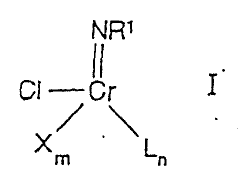 où les variables ont la signification suivante:
X indépendamment l'un de l'autre, fluor, chlore, brome, iode, NR⁵R⁶, NP(R⁵)₃, OR⁵, OSi(R⁵)₃, SO₃R⁵, OC(O)R⁵, β-dicétonate, sulfate, dicarboxylates, dialcoolates, BF₄⁻, PF₆⁻ ou des anions encombrés, faiblement ou non-coordinants,
R¹ alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle, tandis que le reste organique R¹ peut également porter des substituants inertes; SiR3₃,
R³,R⁵,R⁶ indépendamment l'un de l'autre, alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle; hydrogène, si celui-ci est lié à un atome de carbone, tandis que les restes organiques R³, R⁵ et R⁶ peuvent également porter des substituants inertes,
L donneur neutre,
n 0 à 3,
m 1 pour X dianionique, 2 pour X monoanionique.

4. Système de catalyseurs selon les revendications 1 à 3, **caractérisé par le fait que** le composé activateur (B) est choisi dans le groupe consistant en aluminoxane, triméthylaluminium, triéthylaluminium, triisobutylaluminium, chlorure de diméthylaluminium, chlorure de diéthylaluminium, chlorure de méthylaluminium, chlorure d'éthylaluminium, sesquichlorure de méthylaluminium, tétrakispentafluorophénylborate de diméthylanilinium, trityltétrakispentafluorophénylborate ou trispentafluorophénylborane.

5. Composé d'imidochrome de formule générale II 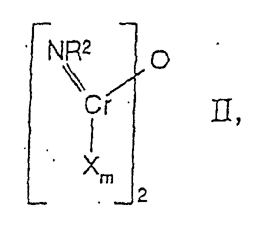 où les variables ont la signification suivante:
R² R³C=NR⁴, R³C=O, R³C=O(OR⁴), R³C=S, (R³)₂P=O, (OR³)₂P=O, SO₂R³, R³R⁴C=N, NR³R⁴ ou BR³R⁴,
X indépendamment l'un de l'autre, fluor, chlore, brome, iode, NR⁵R⁶, NP(R⁵)₃, OR⁵, OSi(R⁵)₃, SO₃R⁵, OC(O)R⁵, β-dicétonate, sulfate, dicarboxylates, dialcoolates, BF₄⁻, PF₆⁻ ou des anions encombrés, faiblement ou non-coordinants,
R³-R⁶ indépendamment l'un de l'autre, alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle; hydrogène, si celui-ci est lié à un atome de carbone, tandis que les restes organiques R³ à R⁶ peuvent également porter des substituants inertes,
m 1 pour X dianionique, 2 pour X monoanionique.

6. Composé d'imidochrome de formule générale III 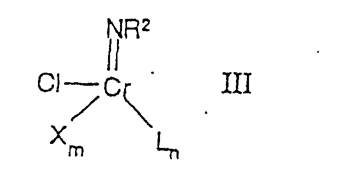 où les variables ont la siqnification suivante:
R² R³C=NR⁴, R³C=O, R³C=O(OR⁴), R³C=S, (R³)₂P=O, (OR³)₂P=O, SO₂R³, R³R⁴C=N, NR³R⁴ ou BR³R⁴,
X indépendamment l'un de l'autre, fluor, chlore, brome, iode, NR⁵R⁶, NP(R⁵)₃, OR⁵, OSi(R⁵)₃, SO₃R⁵, OC(O)R⁵, β-dicétonate, sulfate, dicarboxylates, dialcoolates, BF₄⁻, PF₆⁻ ou des anions encombrés, faiblement ou non-coordinants,
R³-R⁶ indépendamment l'un de l'autre, alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle; hydrogène, si celui-ci est lié à un atome de carbone, tandis que les restes organiques R³ à R⁶ peuvent également porter des substituants inertes,
L donneur neutre,
n 0 à 3,
m 1 pour X dianionique, 2 pour X monoanionique.

7. Procédé pour la préparation d'un composé d'imidochrome de formule générale IV, 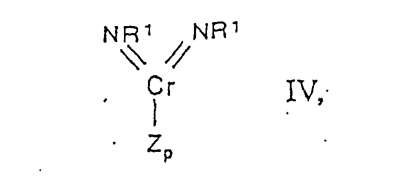 où les variables ont la signification indiquée dans la revendication 3 et:
Z indépendamment l'un de l'autre, alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle, fluor, chlore, brome, iode, NR⁵R⁶, NP(R⁵)₃, OR⁵, OSi(R⁵)₃, SO₃R⁵, OC(O)R⁵, β-dicétonate, sulfate, dicarboxylates, dialcoolates, BF₄⁻, PF₆⁻ ou des anions encombrés, faiblement ou non-coordinants,
p 1 pour Z dianionique, 2 pour Z monoanionique.

8. Procédé pour la préparation d'un composé d'imidochrome de formule générale I 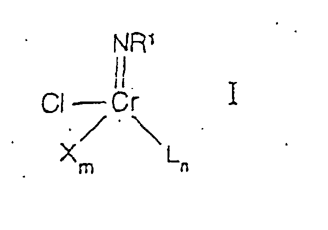 où les variables ont la signification indiquée dans la revendication 3,
**caractérisé par le fait qu'**on fait réagir avec du chlore un composé d'imidochrome de formule générale V 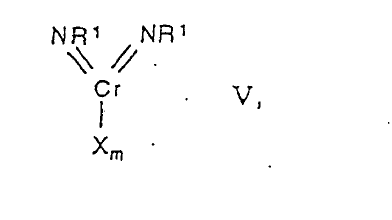 où les variables ont la signification indiquée dans la revendication 3.

9. Procédé pour la préparation d'un composé d'imidochrome de formule générale III 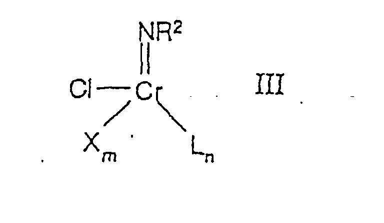 où les variables ont la signification indiquée dans la revendication 6,
**caractérisé par le fait qu'**on fait réagir un composé de dioxochrome avec un composé de N-sulfinyle R²-N=S=O en présence de chlore ou de chlorure de sulfuryle.

10. Procédé pour la préparation d'un composé d'imidochrome de formule générale VI 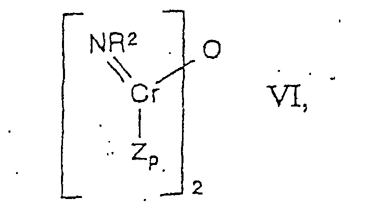 où les variables ont la signification indiquée dans la revendication 6 et 7,
**caractérisé par le fait qu'**on fait réagir un composé de dioxochrome avec un composé de N-sulfinyle R²-NSO.

11. Procédé pour la polymérisation d'oléfines à des températures dans l'intervalle de 0 à 300°C et sous des pressions de 1 à 4000 bar, **caractérisé par le fait qu'**on conduit la polymérisation en présence d'un système de catalyseur selon les revendications 1 à 4.

12. Procédé selon la revendication 11, **caractérisé par le fait qu'**on conduit la polymérisation en phase gazeuse, en solution ou en suspension.

13. Procédé selon la revendication 11 ou 12, **caractérisé par le fait qu'**on polymérise au moins une oléfine choisie dans le groupe consistant en éthène, propène, 1-butène, 1-pentène, 1-hexène, 1-heptène, 1-octène, cyclopentène et norbornène.

14. Procédé selon les revendications 11 à 13, **caractérisé par le fait qu'**au moins un système de catalyseur selon les revendications 1 à 4 est immobilisé sur un support.
